# FASCICULE DE BREVET EUROPEEN

(11) **EP 0 819 227 B1**
(45) Date de publication et mention de la délivrance du brevet: **13.10.1999**
(21) Numéro de dépôt: 96912060.9
(22) Date de dépôt: 03.04.1996
(51) Int. Cl.: F16H 61/02

(54) **SYSTEME A BOITE DE VITESSES MECANIQUE ROBOTISEE COMPRENANT DES MOYENS DE COMMANDE PERFECTIONNES A L'ARRET DU VEHICULE**
VERFAHREN ZUR STEUERUNG EINES HALBAUTOMATISCHEBN GETRIEBES BEIM STILLSTAND EINES FAHRZEUGES
AUTOMATED MECHANICAL GEARBOX SYSTEM INCLUDING IMPROVED CONTROL MEANS FOR WHEN THE VEHICLE IS STATIONARY

(30) Priorité: 03.04.1995 FR 9503888
(43) Date de publication de la demande: 21.01.1998
(73) Titulaire: MAGNETI MARELLI FRANCE, F-92000 Nanterre (FR)
(72) Inventeur: LE VAN, Adriana, F-92300 Levallois-Perret (FR)
(74) Mandataire: Texier, Christian
(86) Numéro de dépôt international: FR9600505
(87) Numéro de publication internationale: WO9631712

(56) Documents cités:
- EP-A- 0 121 168
- EP-A- 0 584 984
- DE-A- 3 605 600
- FR-A- 2 645 805
- FR-A- 2 653 389
- FR-A- 2 672 953

## Description

La présente invention concerne le domaine des boîtes de vitesses pour véhicules automobiles.

On sait qu'il existe aujourd'hui, sur le marché, des véhicules équipés de boîtes de vitesses dites mécaniques et des boîtes de vitesses dites automatiques.

Dans le cas des boîtes de vitesses mécaniques, le rapport d'engrenage engagé est choisi de façon univoque par le conducteur, à l'aide d'un levier adapté et les commutations ou sélections d'engrenages sont commandées mécaniquement et directement par le levier.

En revanche, dans le cas des boîtes de vitesses automatiques, le conducteur n'a accès, par le biais d'un levier, qu'au choix d'un mode de conduite avant (petite ou grande vitesse) ou arrière et les positions point mort ou point neutre (parfois dénommées "position garage"). Sur cette base, un module pilote automatiquement la boîte de vitesses tant dans un sens d'évolution des rapports que dans l'autre, c'est-à-dire tant dans le sens montée des rapports de vitesse que dans le sens de descente de ceux-ci, sans que le conducteur ne puisse alors imposer un choix précis de rapport.

Les boîtes de vitesses automatiques sont assez bien admises par certains conducteurs. Toutefois, les boîtes de vitesses automatiques ne font pas l'unanimité. En particulier, le marché latin accepte assez peu celles-ci.

Depuis quelques années, certaines sociétés ont proposé des véhicules équipés de boîtes de vitesses dites mécaniques robotisées.

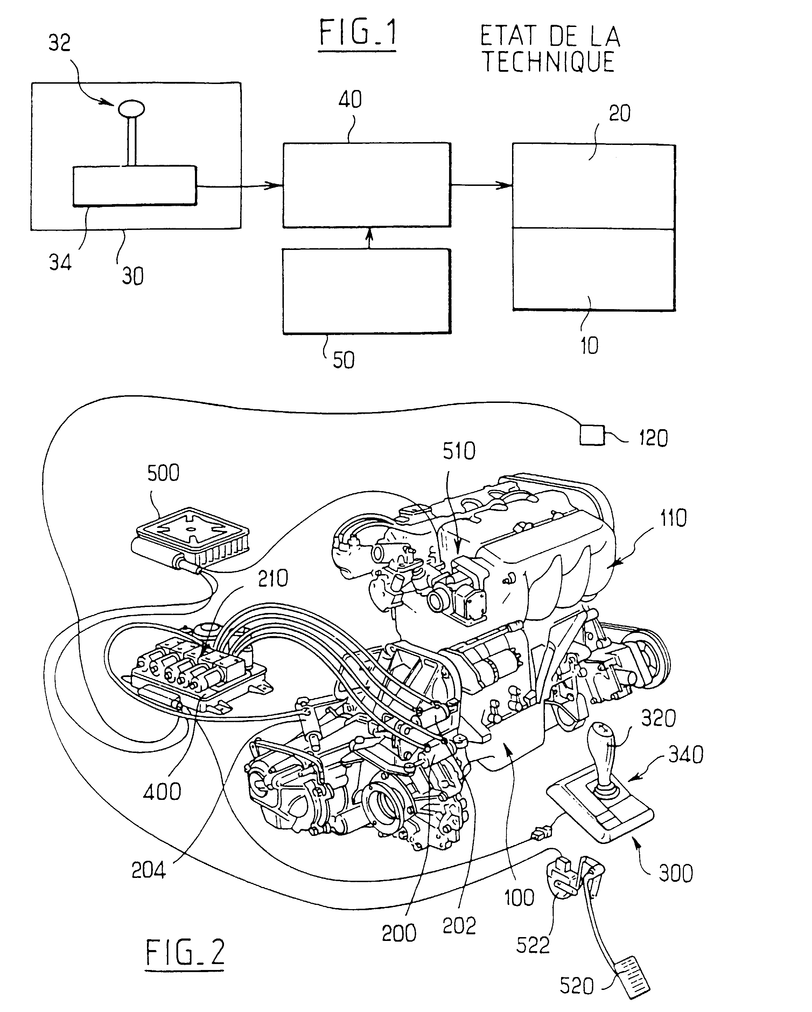

On a schématisé sur la figure 1 annexée la structure générale classique d'un tel système à boîte de vitesses mécanique robotisée.

Ces systèmes comprennent des boîtes de vitesses mécaniques classiques 10 munies d'actionneurs 20, généralement des actionneurs ou servo-commandes à fluide, aptes à agir sur la boîte de vitesses 10 pour exécuter des changements de rapport sur la base d'ordres émis par un ensemble de commande 30. Cet ensemble de commande 30 comprend un levier de commande 32 à actionnement manuel et des transducteurs de contrôle 34 sensibles au déplacement du levier de commande 32 pour définir des ordres de passage des rapports de la boîte de vitesses. L'ensemble de commande 30 est associé à un module électronique 40 qui reçoit les ordres de passages précités générés par les transducteurs de contrôle 34. Le module électronique 40 pilote les actionneurs 20 associés à la boîte de vitesses 10. En outre, généralement le module électronique 40 est relié à des capteurs, par exemple un capteur 50 de vitesse du véhicule, de sorte que le module électronique 40 contrôle l'exécution par les actionneurs 20 des ordres de passage émis par l'ensemble de commande 30 en fonction de la vitesse du véhicule. Pour cela, le module électronique 40 n'applique les ordres issus de l'ensemble de commande 30, sur les actionneurs 20, qu'à la condition que ces ordres soient compatibles avec les conditions opérationnelles du véhicule.

Le conducteur reste ainsi maitre du rapport de vitesses enclenché, puisqu'il agit sur le levier 32 pour demander un changement de ce rapport (dans le sens d'une montée de rapport ou dans le sens d'une descente de rapport, voire une demande en marche arrière). Cependant le module électronique 40 gère l'ensemble du système et n'autorise le changement de rapport que si les conditions opérationnelles du véhicule sont compatibles avec ce changement.

De tels systèmes de boîte de vitesses mécaniques robotisées offrent de nombreux avantages par rapport aux dispositions antérieures connues :
- ils permettent d'améliorer le confort de conduite,
- ils permettent de supprimer la pédale d'embrayage, comme dans le cas d'une boîte de vitesses automatique,
- ils permettent le changement de vitesse à pédale d'accélérateur appuyée, lorsqu'une intégration avec le contrôle moteur est prévue,
- ils autorisent un prix intermédiaire entre une boîte de vitesses mécanique et une boîte de vitesses automatique,
- ils maintiennent entièrement le plaisir de conduite,
- ils permettent d'améliorer les performances de consommation, de puissance, de fatigue du moteur, par rapport à une boîte de vitesses mécanique,
- ils prolongent la durée de vie des différents organes,
- ils permettent d'améliorer la sécurité de conduite par rapport à une boîte de vitesses mécanique, et
- ils sont compatibles avec les boîtes de vitesses mécaniques classiques.

Le document EP-A-0584984 décrit un dispositif de commande pour boîte mécanique de vitesse semi-automatique ou automatique de véhicule dans lequel un rapport prédéterminé de démarrage est engagé automatiquement si la vitesse du véhicule est inférieure à une valeur donnée.

Cependant, malgré tous ces avantages, les systèmes de boîte de vitesses mécaniques robotisées n'ont pas connu jusqu'ici le développement escompté.

La présente invention a maintenant pour but de perfectionner les systèmes de boîte de vitesses mécaniques robotisées.

Ce but est atteint selon la présente invention grâce à un système à boîte de vitesses mécanique robotisée caractérisé par le fait qu'il comprend des moyens adaptés pour commander l'engagement automatique de la première vitesse lorsque le système détecte l'arrêt du véhicule, moteur tournant, avec un rapport de boîte différent de la position point mort ou marche arrière.

Ce but est atteint selon la présente invention grâce à un système à boîte de vitesses mécanique robotisée caractérisé par le fait qu'il comprend des moyens adaptés pour piloter un mode de fonctionnement automatique du changement des rapports de la boîte de vitesses.

Ce but est atteint selon la présente invention grâce à un système à boîte de vitesses mécanique robotisée caractérisé par le fait qu'il comprend des moyens adaptés pour gérer et détecter un mode basse adhérence des roues du véhicule et imposer lors d'une telle détection une gestion apte à assurer des variations minimum du couple moteur transmis aux roues.

D'autres caractéristiques, buts et avantages de la présente invention apparaîtront à la lecture de la description détaillée qui va suivre, et en regard des dessins annexés, donnés à titre d'exemple non limitatif et sur lesquels :
- la figure 1 précédemment décrite représente schématiquement sous forme de blocs fonctionnels un système à boîte de vitesses mécanique robotisée conforme à l'état de la technique,
- la figure 2 représente une vue schématique d'un système conforme à la présente invention,
- la figure 3 représente un synoptique d'un système conforme à la présente invention,
- la figure 4 représente un organigramme de fonctionnement en mode automatique conforme à la présente invention,
- la figure 5 représente un exemple de cartographie de fonctionnement en mode automatique, et
- la figure 6 représente un schéma de contrôle de l'embrayage.

On aperçoit sur la figure 2 annexée une vue générale du système à boîte de vitesses mécanique robotisée conforme à la présente invention, qui comprend principalement :
- un moteur thermique 110,
- une boîte de vitesses mécanique 100,
- deux actionneurs ou vérins 200 et 202 placés sur le carter de la boîte de vitesses 100 pour assurer respectivement l'opération mécanique d'engagement/dégagement des rapports de boîte et l'opération mécanique de sélection de rapport de boîte,
- un actionneur ou vérin 204 additionnel associé au système d'embrayage/débrayage pour contrôler celui-ci,
- un ensemble de commande 300 qui comprend un levier de commande 320 à actionnement manuel et des transducteurs de contrôle 340 sensibles au déplacement du levier de commande 320 pour définir des ordres de passage des rapports de la boîte de vitesses,
- un module électronique 400 qui reçoit les ordres de passages précités générés par les transducteurs de contrôle 340 et qui pilote les actionneurs 200, 202 et 204 associés à la boîte de vitesses 100 et à l'embrayage, via une centrale hydraulique 210.

Le module électronique 400 peut être relié à un simple capteur de vitesse 120 de rotation du moteur du véhicule de sorte que le module électronique 400 contrôle l'exécution par les actionneurs 200, 202 et 204 des ordres de changement de rapports de boîte, émis par l'ensemble de commande 300, en fonction du régime du moteur.

Cependant de préférence, le module électronique 400 est également relié directement au calculateur 500 de gestion du moteur.

Le module 400 peut ainsi bénéficier des informations disponibles sur le calculateur 500 (notamment couple moteur instantané, régime - c'est à dire vitesse de rotation - du moteur et vitesse de rotation en sortie de boîte) et également piloter ce dernier pour gérer le couple moteur, par exemple en agissant sur le commande du papillon d'admission d'air 510 ou encore sur le contrôle d'injection. En particulier pendant les changements de rapport de boîte de vitesses, le module 400 pilote le calculateur 500 de sorte que ce dernier effectue une gestion du moteur en des termes de régime de rotation ou de couple fourni pour éviter des contrecoups ou des vibrations durant les changements de vitesse.

La coopération entre le module 400 et le calculateur 500 contrôle de préférence chaque changement de rapport de boîte sous forme d'une séquence de quatre étapes suivantes :
1) Dans une première étape, le module 400 demande au calculateur 500 de réduire le couple fourni par le moteur puis commande le débrayage,
2) Dans une seconde étape, le module 400 dégage le rapport de boîte précédemment mis en oeuvre,
3) Dans une troisième étape, le module 400 pilote la sélection, la synchronisation et l'engagement du nouveau rapport de boîte sélectionné, (dans les boîtes sans synchronisateur, l'engagement du rapport n'est opéré que lorsque les tours du primaire de la boîte ont atteint le régime requis)
4) Dans une quatrième étape, le module 400 demande au calculateur 500 le rétablissement du couple moteur et commande l'embrayage.

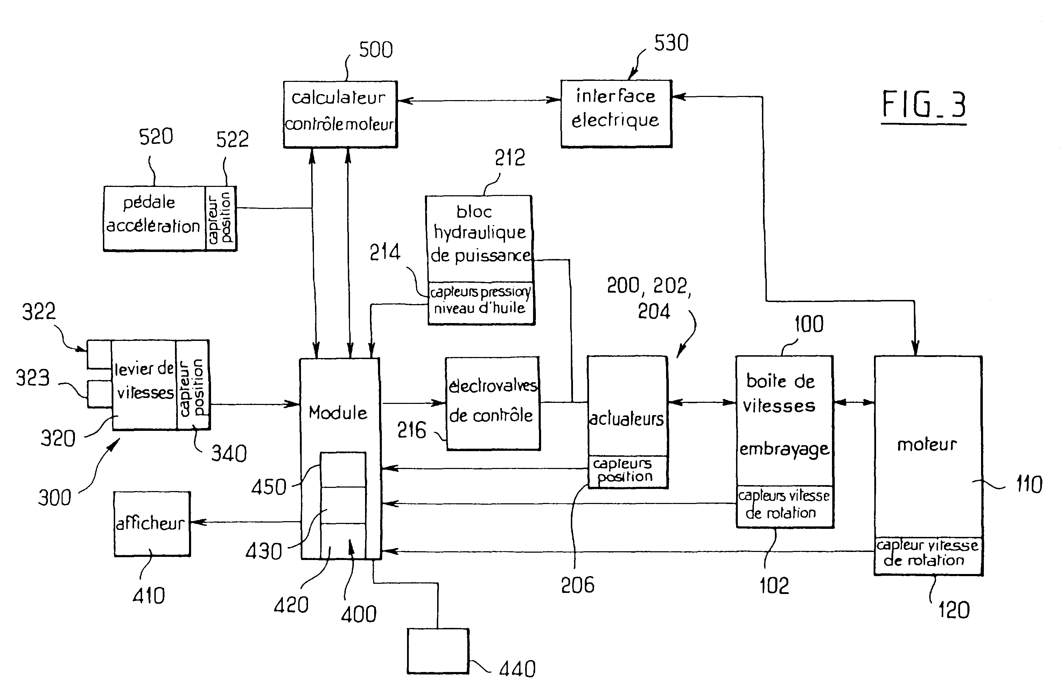

Le synoptique du système est représenté plus en détail sur la figure 3 annexée.

Sur cette figure 3 on distingue, en plus des éléments décrits précédemment en regard de la figure 2, les éléments suivants :
- un afficheur 410 associé au module 400 pour visualiser, à l'attention du conducteur, le rapport de boite engagé,
- une pédale d'accélération 520 associée à un capteur de position 522 relié au module 400 et au calculateur 500,
- un bloc hydraulique de puissance 212 associé à des capteurs 214 de pression/niveau d'huile reliés au module 400 et des électrovalves de contrôle 216 pilotées par le module 400 et qui commandent les actionneurs 200, 202 et 204,
- des capteurs de position 206 associés à ces actionneurs 200, 204 et 206 et reliés au module 400 pour contrôler la position réelle des actionneurs,
- des capteurs de rotation 102 placés en entrée et en sortie de la boîte de vitesses 100 et reliés au module 400 et
- un moyen d'interface 530 placé entre le calculateur 500 et le moteur 110, pour transformer la sortie électrique du calculateur 500 en une commande d'ouverture du volet de contrôle d'arrivée d'air (papillon).

Le fonctionnement général du système qui vient d'être décrit est le suivant.

Le levier de vitesse 320, activé par le conducteur, transmet la requête du conducteur au calculateur 400, via les capteurs 340. Aprés avoir analysé la légitimité de la demande du conducteur, le module 400 procède au changement de rapport ainsi demandé.

Le module 400 commande les électrovalves 216 de contrôle de l'embrayage, sélection et engagement, et dialogue avec le calculateur 500 de contrôle moteur pour la gestion appropriée du couple et du régime moteur pendant le changement de vitesse.

Les commandes sont confirmées par les capteurs 206 de position sur les vérins 200, 202 et 204, et les capteurs 102 et 120 de vitesses de rotation moteur, entrée et sortie de boîte 100.

Le rapport absolu engagé dans la boîte 100 est visualisé sur l'afficheur 410.

On va maintenant préciser trois caractéristiques additionnelles importantes de la présente invention.

Selon une première de ces caractéristiques additionnelles de l'invention, le module 400 possède des moyens 420 adaptés pour piloter un mode de fonctionnement automatique du changement des rapports de la boite de vitesses 100. Lorsque les moyens 420 sont activés, les passages de vitesse ou changement de rapport de boîte sont initiés et déclenchés par le module 400 lui même et non pas par le conducteur.

Pour celà les moyens 420 comprennent de préférence une mémoire qui stocke les informations nécessaires pour assurer les changements de rapport de boîte, en particulier les cartographies des passages en fonction de la position de la pédale d'accélération 520, le régime moteur et la vitesse du véhicule.

La qualité du passage de vitesse dans ce mode de fonctionnement en automatique tient compte du fait que le système agit sur une boîte de vitesses mécanique traditionnelle avec des rapports discrets.

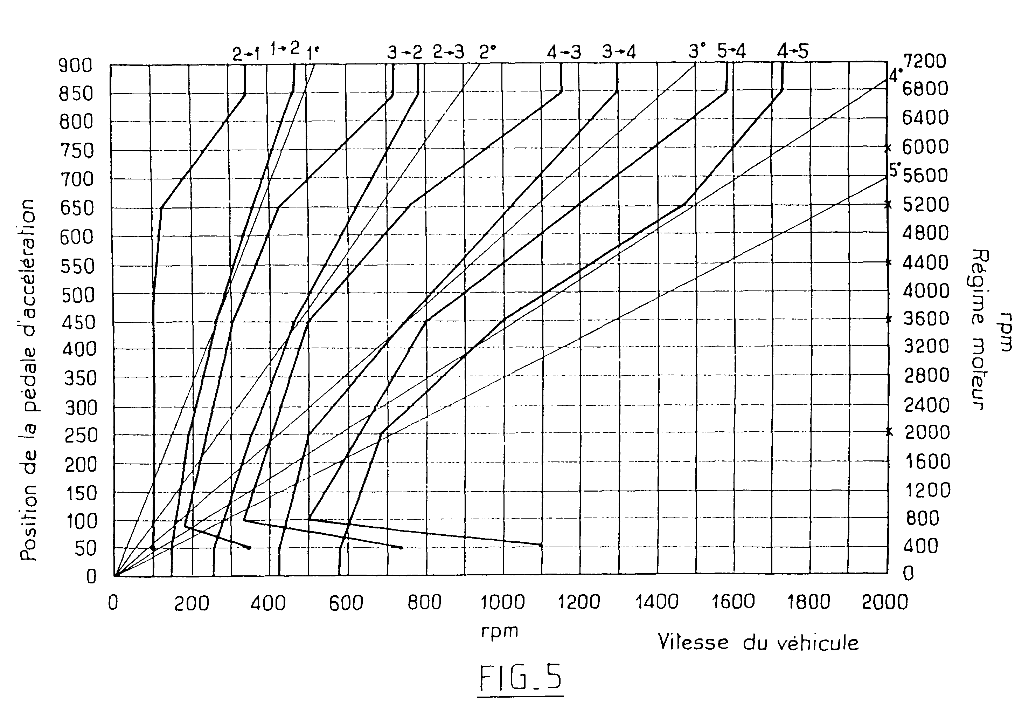

On a représenté sur la figure 5 annexée, un exemple non limitatif de cartographie, contenue dans les moyens 420, de passage de rapport de boîte en fonction de la position de la pédale d'accélération 520, du régime moteur, et de la vitesse du véhicule. Sur la figure 5, les courbes de changement de rapport sont représentées en traits épais, tandis que les courbes de rapport de boîte sont représentées en traits fins.

Lorsque le système est placé en mode automatique de fonctionnement, les rapports de vitesses passent automatiquement sans l'intervention du conducteur selon les cartographies représentées sur la figure 5.

Il peut s'agir de cartographies, classiques pour l'homme de l'art, de boîte de vitesses automatique.

Les moyens 420 du module 400 permettent de préférence le stockage de trois familles de cartographies fixes correspondant à des conditions de conduite : économique, confort et sport mais ne permettent pas une gestion auto-adaptative de celles-ci. La sélection entre ces trois familles de cartographie est faite par le conducteur, par exemple à l'aide d'un bouton de sélection.

Les valeurs numériques données sur la figure 5 doivent être considérées uniquement à titre d'exemple. En pratique, les courbes doivent être définies spécifiquement pour chaque application. (type de véhicule).

Plus précisément le passage en mode automatique peut se faire a) soit manuellement à l'aide d'une commande 322 à disposition du conducteur, b) soit automatiquement.

La commande 322 mise à disposition du conducteur est de préférence formée d'un bouton monostable, placé par exemple sur le levier 320. Par l'activation de cette commande 322, le conducteur peut décider du passage en mode automatique.

De préférence l'activation de la commande 322 définit un régime automatique transitoire. C'est à dire que le module 400 acquiert le pilotage automatique du changement de vitesses uniquement aprés activation de la commande 322. Par ailleurs le module 400 maintient le mode de fonctionnement automatique tant que le conducteur n'agit pas sur le levier 320 de commande de changement de vitesse et supprime ce mode de fonctionnement automatique lors d'un tel actionnement du levier 320.

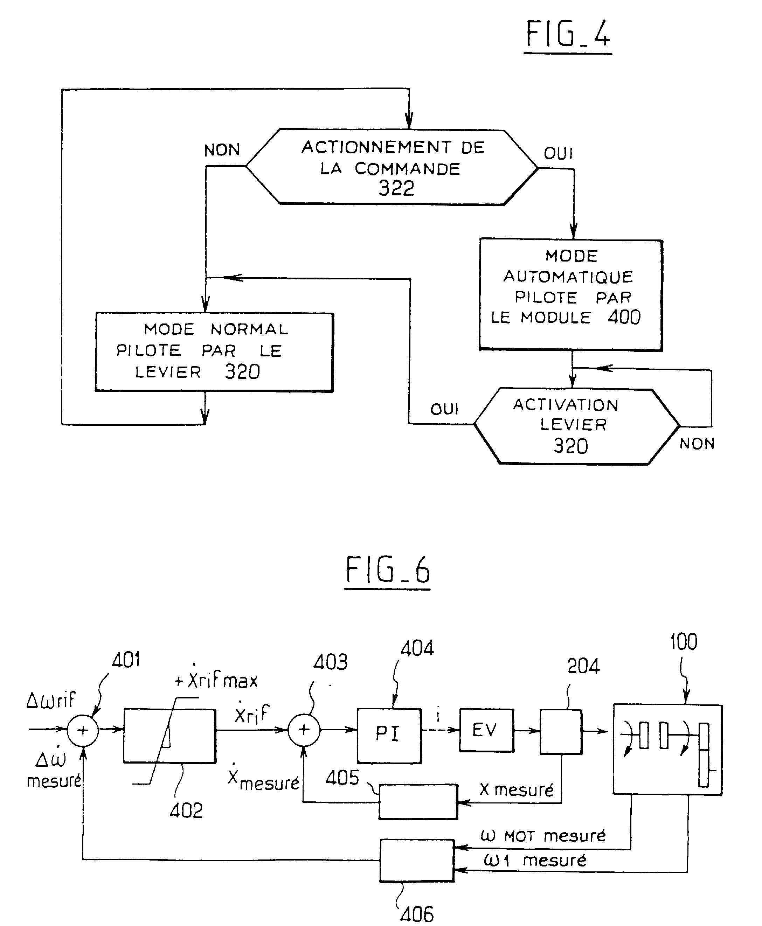

L'organigramme correspondant à un tel mode de fonctionnement en automatique demandé par le conducteur est illustré schématiquement sur la figure 4 annexée.

On comprend à l'examen de cet organigramme que le passage du mode automatique en mode "manuel", c'est à dire piloté par le levier 320 se fait uniquement à l'initiative du conducteur. Dés que le conducteur agit sur le levier 320, le module 400 passe en mode manuel, commandant l'engagement de la vitesse supérieure ou de la vitesse inférieure à celle dans laquelle se trouvait la boite 100 en mode automatique. Les commandes Point Mort ou Marche Arrière agissent aussi immédiatement (pour passer par conséquent du mode automatique en mode normal) si les conditions de passage sont réunies. Toutefois il existe une exception à la règle ci-dessus : lorsque le véhicule est à l'arrêt ou que des manoeuvres de stationnement sont effectuées à partir de cette position d'arrêt, le système reste en mode automatique malgré les interventions du conducteur sur le levier pour sélectionner une marche avant ou un marche arrière.

En variante on peut également passer du mode automatique au mode manuel par sollicitation de la commande 322 (bouton monostable par exemple).

L'avantage de l'utilisation d'un bouton monostable pour la commande du mode automatique est notamment que le conducteur ne doit pas effectuer plusieurs manoeuvres pour revenir en mode manuel.

Lorsque le conducteur quitte le mode automatique, le module 400 abandonne un éventuel changement de vitesse qui serait en train de s'effectuer au moment de l'actionnement du levier 320.

De préférence à la coupure de la clé de contact le système conserve le mode de fonctionnement existant précédemment.

Le passage automatique en mode de fonctionnement automatique est décidé par un sous ensemble des moyens 420 lorsque le module 400 ne reconnait plus les demandes émanant du conducteur, exprimées par l'actionnement du levier 320.

Dans ce cas le mode automatique est de préférence un mode dégradé de fonctionnement dans lequel le module 400 limite les autorisations de changements de rapports de boîte, par exemple en autorisant uniquement les passages jusqu'au 3ème rapport pour une boite à 5 vitesses. Un tel mode dégradé est notamment une incitation pour le conducteur à se rendre dans un atelier de maintenance pour identifier et réparer les causes du défaut de reconnaissance des ordres issues des transducteurs 340.

Selon une seconde de ces caractéristiques additionnelles de l'invention, le module 400 possède des moyens 430 adaptés pour commander l'engagement automatique de la première vitesse lorsque le système détecte l'arrêt du véhicule, moteur 110 tournant, avec un rapport de boite différent de la position point mort ou marche arrière.

Ces moyens 430 permettent notamment lors d'un arrêt, par exemple à un feu de signalisation tricolore, un démarrage immédiat, modulé par la pédale d'accélération 520.

De préférence le système comprend en outre un dispositif 440, par exemple un dispositif acoustique, adapté pour avertir le conducteur de situations dangereuses, par exemple du type véhicule à l'arrêt, moteur tournant avec la première engagée et porte du véhicule ouverte.

Le système considère que le véhicule est à l'arrêt lorsque le régime moteur (détecté par le capteur 120) et les régimes en entrée et en sortie de boite 100 (détectés par les capteurs 102) sont en dessous d'un seuil minimum pendant un temps prédéfini T.

Ce paramètre T est configurable différemment selon la présence ou non d'un système ABS.

Lorsque le véhicule n'est pas doté d'un système ABS, le temps T sera plus long pour ne pas confondre l'arrêt du véhicule avec une période de patinage roues bloquées sur glace par exemple.

Selon un mode typique de mise en oeuvre, les moyens 430 sont adaptés pour commander l'engagement automatique de la première vitesse lorsque :
- le levier 320 est en position de repos, et
- le système n'est pas en mode automatique de fonctionnement, et
- le rapport de vitesse engagé est un rapport qui correspond à une vitesse supérieure à la première, et
- le régime moteur est supérieur à un seuil, par exemple 400tr/min, et
- le régime de l'arbre primaire de la boite 100 est inférieur à un seuil, par exemple 200tr/min, et
- le régime de l'arbre de sortie du différentiel est inférieur à un seuil, par exemple 50tr/min.

Les moyens 430 commandent l'engagement de la première vitesse en pilotant successivement :
- le dégagement de l'ancien rapport (vitesse 2 à 5),
- la sélection du rang contenant la première vitesse, et
- l'engagement de la première vitesse.

Pendant toutes ces opérations, l'embrayage reste ouvert.

Selon une troisième de ces caractéristiques additionnelles de l'invention, le module 400 possède des moyens 450 adaptés pour détecter un mode basse adhérence des roues du véhicule et imposer, lors d'une telle détection, une gestion par le module 400 apte à assurer des variations minimum du couple moteur transmis aux roues.

De préférence les moyens 450 réalisent cette gestion par une paramétrisation différente des lois de :
- décharge du couple moteur demandée au calculateur 500 avant le changement de rapport,
- le débrayage avant le changement de rapport,
- l'embrayage aprés le changement de rapport,
- la remise du couple moteur demandé au calculateur 500 aprés le changement de rapport, et
- l'embrayage lors du démarrage du véhicule.

En outre les moyens 450 sont de préférence adaptés pour imposer automatiquement le passage de la seconde vitesse à l'arrêt du véhicule lorsque des conditions de basse adhérence sont détectées.

Il faut noter que le temps de changement de vitesse avec le processus précité est augmenté. Néanmoins le temps de perte de traction lors du changement de vitesse reste inchangé car ce temps concerne uniquement les actionnements : dégagement, sélection, engagement, qui n'influent pas sur les variations du couple moteur transmis.

Les temps de décharge/remise du couple et débrayage/embrayage seront plus longs par rapport au mode adhérence normale et différents (plus longs) en rétrogrades par rapport aux changements de vitesse montants.

Le passage en mode basse adhérence peut se faire soit a) manuellement, par actionnement d'une commande appropriée 323 par le conducteur, soit b) automatiquement.

La commande 323 est formée de préférence d'un bouton bistable à deux positions : une première position correspondant à un mode de fonctionnement basse adhérence et une deuxième position correspondant à un mode de fonctionnement normal.

Lorsque les moyens 450 détectent le passage de la commande 323 en première position, c'est-à-dire qu'ils détectent le mode dit basse adhérence des roues, ils initient directement la gestion apte à assurer des variations minimum du couple moteur transmis aux roues.

Les moyens 450 possèdent un sous ensemble adapté pour détecter une situation "roues bloquées", par exemple par scrutation d'une sortie correspondante sur un calculateur ABS, et piloter en conséquence automatiquement le passage en mode basse adhérence.

A partir d'un mode basse adhérence, le retour en mode adhérence normale peut se faire soit a) manuellement à l'aide de la commande 323 (pour celà le conducteur agit sur le bouton 323 pour le ramener en deuxième position) , soit b) automatiquement (dans ce cas le module 400 ramène automatiquement le système en mode normal lorsque il ne reçoit plus de signal "roues bloquées"),

De préférence l'embrayage associé au moteur 110 est contrôlé en boucle fermé par le module 400 selon un algorithme de type PI (Proportionnel Intégral), conforme au schéma de contrôle illustré sur la figure 6.

En référence à la figure 6, on appelle :
- Δω· rif : une consigne à atteindre, égale à la différence dérivée entre un régime moteur de consigne ωmot et le régime de consigne de l'arbre primaire de la boîte ω1 ; la valeur Δω· rif correspond à un paramètre imposé au système par le module 400 en fonction de la position de la pédale d'accélérateur et du changement de rapport en cours,
- X· rif: la position dérivée du vérin d'embrayage 204. C'est un paramètre imposé au système (objectif à atteindre) en fonction de la position de la pédale d'accélérateur et du changement de rapport en cours.
   PI : l'algorithme de contrôle de type PI
   i : le courant de commande de l'électrovalve d'embrayage
   EV : l'électrovalve d'embrayage
   X mesuré : la position du vérin d'embrayage 204 mesurée par capteur de position associée à celui-ci,
   ωMOT mesuré : le régime moteur mesuré
   ω1 mesuré : le régime arbre primaire mesuré
   Δω· mesuré : la différence dérivée du régime moteur mesuré et du régime arbre primaire mesuré.

Comme on le voit sur la figure 6, la boucle d'asservissement d'embrayage comprend :
- un additionneur 401 qui assure la sommation des paramètres précités Δω· mesuré,
- un module de calcul 402 qui intègre le signal de sortie de l'additionneur 401 jusqu'à une limite X· rif max, et fournit à sa sortie le signal X· rif,
- un additionneur 403 qui assure la sommation entre les signaux X· rif et X· mesuré (ce dernier étant égal à la dérivée du signal X mesuré généré par le capteur associé au vérin d'embrayage 204),
- un module de calcul 404 qui applique l'algorithme de contrôle de type PI au signal issu de l'additionneur 403, et génère à sa sortie le courant i de commande de l'électrovalve d'embrayage,
- l'électrovalve EV piloté par le courant i,
- le vérin d'embrayage 204, équipé du capteur de position délivrant le signal X mesuré,
- un module de calcul 405 qui calcule la dérivée X· mesuré du signal généré par ce capteur, et
- un module de calcul 406 qui calcule la différence dérivée Δω· mesuré entre le régime moteur mesuré ωMOT mesuré et le régime arbre primaire mesuré ω1.

Le mode basse adhérence est obtenu en donnant des valeurs adéquates aux paramètres Δω· rif et X· rif de manière à ce que l'embrayage se ferme plus lentement et à assurer des variations minimum du couple moteur transmit aux roues.

## Revendications

1. Système à boîte de vitesses mécanique robotisée comprenant des moyens (430) adaptés pour détecter une situation de véhicule à l'arrêt en détectant lorsque le régime moteur (120) et les régimes en entrée et en sortie de boîte (100) sont en dessous d'un seuil minimum pendant un temps prédéfini (T) et pour commander l'engagement automatique de la première vitesse lorsque le système détecte l'arrêt du véhicule, moteur (110) tournant, avec un rapport de boîte différent de la position point mort ou marche arrière.

2. Système selon la revendication 1 caractérisé par le fait qu'il comprend un dispositif (440) de signalisation adapté pour avertir le conducteur de situations dangereuses.

3. Système selon l'une des revendications 1 ou 2 caractérisé par le fait qu'il comprend un dispositif (440) de signalisation adapté pour avertir le conducteur de situations dangereuses du type véhicule à l'arrêt, moteur tournant avec la première engagée et porte du véhicule ouverte.

4. Système selon l'une des revendications 2 ou 3 caractérisé par le fait que le dispositif (440) de signalisation est un dispositif acoustique.

5. Système selon l'une des revendications 1 à 4 caractérisé par le fait que le temps prédéfini (T) est configurable différemment selon la présence ou non d'un système ABS.

6. Système selon l'une des revendications 1 à 5 caractérisé par le fait qu'il comprend un dispositif (430) de commande adapté pour commander l'engagement automatique de la première vitesse lorsque :
- un levier de commande (320) est en position de repos, et
- le système n'est pas en mode automatique de fonctionnement, et
- le rapport de vitesse engagé est un rapport qui correspond à une vitesse supérieure à la première, et
- le régime moteur est supérieur à un seuil, et
- le régime de l'arbre primaire de la boîte (100) est inférieur à un seuil, et
- le régime de l'arbre de sortie du différentiel est inférieur à un seuil.

7. Système selon l'une des revendications 1 à 6 caractérisé par le fait qu'il comprend des moyens de commande (420) adaptés pour piloter un mode de fonctionnement automatique du changement des rapports de la boîte de vitesses (100).

8. Système selon la revendication 7 caractérisé par le fait que les moyens de commande (420) comprennent une mémoire qui stocke les informations nécessaires pour assurer les changements de rapport de boîte.

9. Système selon l'une des revendications 7 ou 8 caractérisé par le fait que les moyens de commande (420) comprennent une mémoire qui stocke les cartographies des passages de vitesse en fonction notamment de la position de la pédale d'accélération (520), le régime moteur et la vitesse du véhicule.

10. Système selon la revendication 9, caractérisé par le fait que les moyens de commande (420) stockent plusieurs cartographies de passage des vitesses, sélectionnables par le conducteur.

11. Système selon l'une des revendications 9 ou 10, caractérisé par le fait que les moyens de commande (420) stockent trois cartographies correspondant respectivement à une conduite économique, confort et sport, sélectionnables par le conducteur.

12. Système selon l'une des revendications 9 à 11 caractérisé par le fait que les moyens de commande (420) comprennent une commande (322) mise à disposition du conducteur pour initier un mode de fonctionnement automatique et le cas échéant un passage de mode automatique en mode manuel.

13. Système selon la revendication 12 caractérisé par le fait que la commande (322) mise à disposition du conducteur est formée d'un bouton monostable.

14. Système selon l'une des revendications 12 ou 13, caractérisé par le fait que la commande (322) est placée sur un levier (320) de commande de changement de rapport de boîte de vitesses.

15. Système selon l'une des revendications 12 à 14 caractérisé par le fait que la commande (322) mise à disposition du conducteur définit un régime automatique transitoire.

16. Système selon l'une des revendications 12 à 15 caractérisé par le fait que la commande (322) mise à disposition du conducteur définit un régime automatique transitoire dans lequel un module (400) de commande maintient le mode de fonctionnement automatique tant que le conducteur n'agit pas sur un levier (320) de commande de changement de vitesse ou sur la commande (322) et supprime ce mode de fonctionnement automatique lors d'un tel actionnement du levier (320) ou de la commande (322).

17. Système selon l'une des revendications 1 à 16 caractérisé par le fait qu'il comprend un sous ensemble adapté pour imposer un mode de fonctionnement automatique lorsqu'il ne reconnait plus les demandes émanant du conducteur, exprimées par l'actionnement d'un levier (320).

18. Système selon la revendication 17 caractérisé par le fait que le sous ensemble est adapté pour imposer un mode dégradé de fonctionnement limitant les autorisations de changements de rapports de boîte.

19. Système selon l'une des revendications 1 à 18 caractérisé par le fait qu'il comprend des moyens (450) adaptés pour gérer et détecter un mode basse adhérence des roues du véhicule et imposer lors d'une telle détection une gestion apte à assurer des variations minimum du couple moteur transmis aux roues.

20. Système selon l'une des revendications 1 à 19 caractérisé par le fait qu'il comprend des moyens (450) adaptés pour détecter un mode basse adhérence des roues du véhicule et imposer lors d'une telle détection une gestion apte à assurer des variations minimum du couple moteur transmis aux roues par une paramétrisation différente des lois de :
- décharge du couple moteur demandée à un calculateur (500) de contrôle moteur avant les changements de rapport,
- le débrayage avant les changements de rapport,
- l'embrayage aprés les changements de rapport,
- la remise du couple moteur demandé au calculateur (500) après les changements de rapport, et
- l'embrayage lors du démarrage du véhicule.

21. Système selon l'une des revendications 1 à 20 caractérisé par le fait qu'il comprend des moyens (450) adaptés pour détecter un mode basse adhérence des roues du véhicule et imposer automatiquement le passage de la seconde vitesse à l'arrêt du véhicule lorsque des conditions de basse adhérence sont détectées.

22. Système selon l'une des revendications 19 à 21 caractérisé par le fait qu'il comprend des moyens (323) à actionnement manuel aptes à activer des moyens (450) adaptés pour détecter un mode basse adhérence des roues du véhicule et imposer lors d'une telle détection une gestion apte à assurer des variations minimum du couple moteur transmis aux roues.

23. Système selon la revendication 22 caractérisé par le fait que les moyens (323) à actionnement manuel sont formés d'un bouton bistable à deux positions : une première position correspondant à un mode de fonctionnement basse adhérence et une deuxième position correspondant à un mode de fonctionnement normal.

24. Système selon l'une des revendications 19 à 23 caractérisé par le fait qu'il comprend des moyens pour détecter une situation "roues bloquées" et activer alors automatiquement des moyens (450) adaptés pour imposer une gestion apte à assurer des variations minimum du couple moteur transmis aux roues.

25. Système selon la revendication 24 caractérisé par le fait que les moyens pour détecter une situation "roues bloquées" procèdent par scrutation d'une sortie correspondante sur un calculateur ABS.

26. Système selon l'une des revendications 1 à 25, caractérisé par le fait que l'embrayage est contrôlé en boucle fermé par un algorithme de type proportionnel intégral.

27. Système selon l'une des revendications 1 à 26, caractérisé par le fait que la boucle de contrôle de l'embrayage comprend :
- un additionneur (401) qui assure la sommation d'une part, d'une consigne Δω· rif égale à la différence dérivée entre un régime moteur de consigne et le régime de consigne de l'arbre primaire de la boîte de vitesse,
- un module (402) qui intègre le signal de sortie de l'additionneur précité (401) jusqu'à une limite X· rif max,
- un additionneur (403) qui assure la sommation entre la sortie du module de calcul précité et la dérivée d'un signal généré par un capteur associé au vérin d'embrayage (204),
- un module de calcul (404) qui applique un algorithme de contrôle de type proportionnel intégral au signal issu de l'additionneur (403) précité et génère à sa sortie un courant i de commande de l'électrovalve d'embrayage,
- l'électrovalve d'embrayage (EV),
- le vérin d'embrayage (204),
- un module (405) qui calcule la dérivée du signal généré par le capteur associé au vérin d'embrayage (204), et
- un module de calcul (406) qui calcule la différence (Δω·) dérivée entre le régime moteur mesuré (ωMOT) et le régime arbre primaire mesuré (ω1).

28. Système selon la revendication 27 prise en combinaison avec l'une des revendications 21 à 25, caractérisé par le fait que le mode basse adhérence est obtenu en donnant des valeurs adéquates aux paramètres d'entrée (Δω· rif) du premier additionneur (401) et (X· rif) de sortie du premier module de calcul (402) de manière à ce que l'embrayage se ferme lentement et à assurer des variations minimum du couple moteur transmis aux roues.

## Patentansprüche

1. Automatisiertes mechanisches Getriebesystem mit Vorrichtungen (430), welche dafür eingerichtet sind, eine Fahrzeugsituation des Stillstandes zu erfassen, indem erfaßt wird, wenn die Motordrehzahl (120) und die Drehzahlen am Eingang und am Ausgang des Getriebes (100) während einer vorbestimmten Zeit (T) unterhalb eines Mindestschwellenwertes liegen, und das automatische Einlegen des ersten Gangs zu veranlassen, wenn das System den Stillstand des Fahrzeugs bei laufendem Motor mit einem Getriebegang, welcher von der Leerlaufposition oder dem Rückwärtsgang abweicht, erfaßt.

2. System gemäß Anspruch 1, dadurch gekennzeichnet, daß es eine Signalgebungsvorrichtung (440) aufweist, welche dafür eingerichtet ist, den Fahrer vor gefährlichen Situationen zu warnen.

3. System gemäß einem der Ansprüche 1 oder 2, dadurch gekennzeichnet, daß es eine Signalgebungsvorrichtung (440) aufweist, welche dafür eingerichtet ist, den Fahrer vor gefährlichen Situationen der Art Fahrzeug im Stillstand bei laufendem Motor mit eingelegtem ersten Gang und offener Fahrzeugtür zu warnen.

4. System gemäß einem der Ansprüche 2 oder 3, dadurch gekennzeichnet, daß die Signalgebungsvorrichtung (440) eine akustische Vorrichtung ist.

5. System gemäß einem der Ansprüche 1 bis 4, dadurch gekennzeichnet, daß die zuvor definierte Zeit (T) unterschiedlich entsprechend dem Vorhandensein oder Nichtvorhandensein eines ABS-Systems gestaltbar ist.

6. System gemäß einem der Ansprüche 1 bis 5, dadurch gekennzeichnet, daß es eine Steuervorrichtung (430) aufweist, welche dafür eingerichtet ist, das automatische Einlegen des ersten Gangs zu steuern, wenn
- ein Schalthebel (320) sich in Ruheposition befindet, und
- sich das System nicht im automatischen Funktionsmodus befindet, und
- der eingelegte Gang ein Gang ist, welcher einem höheren Gang als dem ersten entspricht, und
- die Motordrehzahl oberhalb eines Schwellenwertes liegt, und
- die Drehzahl der Antriebswelle des Getriebes (100) unterhalb eines Schwellenwertes liegt, und
- die Drehzahl der Abtriebswelle des Differentials unterhalb eines Schwellenwertes liegt.

7. System gemäß einem der Ansprüche 1 bis 6, dadurch gekennzeichnet, daß es Steuervorrichtungen (420) aufweist, welche dafür eingerichtet sind, einen automatischen Funktionsmodus für die Umschaltung der Gänge des Getriebes (100) fernzusteuern.

8. System gemäß Anspruch 7, dadurch gekennzeichnet, daß die Steuervorrichtungen (420) einen Speicher aufweisen, welcher die Informationen speichert, welche notwendig sind für die Sicherstellung der Getriebegartgumschaltungen.

9. System gemäß einem der Ansprüche 7 oder 8, dadurch gekennzeichnet, daß die Steuervorrichtungen (420) einen Speicher aufweisen, welcher die Kartierungen der Gangumschaltungen in Abhängigkeit von insbesondere der Position des Gaspedals (520), der Motordrehzahl und der Geschwindigkeit des Fahrzeugs speichert.

10. System gemäß Anspruch 9, dadurch gekennzeichnet, daß die Steuervorrichtungen (420) mehrere Gangumschaltungskartierungen speichern, welche von dem Fahrer ausgewählt werden können.

11. System gemäß einem der Ansprüche 9 oder 10, dadurch gekennzeichnet, daß die Steuervorrichtungen (420) drei von dem Fahrer auswählbare Kartierungen jeweils entsprechend einer wirtschaftlichen, bequemen und sportlichen Fahrweise speichern.

12. System gemäß einem der Ansprüche 9 bis 11, dadurch gekennzeichnet, daß die Steuervorrichtungen (420) eine dem Fahrer zur Verfügung stehende Steuerung (322) aufweisen, um einen automatischen Funktionsmodus und gegebenenfalls einen Wechsel von dem Automatikmodus in den manuellen Modus zu initiieren.

13. System gemäß Anspruch 12, dadurch gekennzeichnet, daß die dem Fahrer zur Verfügung stehende Steuerung (322) von einem monostabilen Schalter gebildet ist.

14. System gemäß einem der Ansprüche 12 oder 13, dadurch gekennzeichnet, daß die Steuerung (322) auf einem Schalthebel (320) für die Getriebegangschaltung angeordnet ist.

15. System gemäß einem der Ansprüche 12 bis 14, dadurch gekennzeichnet, daß die dem Fahrer zur Verfügung stehende Steuerung (322) einen vorübergehenden Automatikbetrieb definiert.

16. System gemäß einem der Ansprüche 12 bis 15, dadurch gekennzeichnet, daß die dem Fahrer zur Verfügung stehende Steuerung (322) einen vorübergehenden Automatikbetrieb definiert, bei welchem ein Steuermodul (400) den automatischen Funktionsmodus solange beibehält, wie der Fahrer nicht einen Schalthebel (320) für die Gangschaltung oder die Steuerung (322) betätigt, und diesen automatischen Funktionsmodus bei einer solchen Betätigung des Hebels (320) oder der Steuerung (322) beendet.

17. System gemäß einem der Ansprüche 1 bis 16, dadurch gekennzeichnet, daß es eine Untereinheit aufweist, welche dafür eingerichtet ist, einen automatischen Funktionsmodus einzustellen, wenn sie die über die Betätigung eines Hebels (320) ausgedrückten Wünsche des Fahrers nicht mehr erkennt.

18. System gemäß Anspruch 17, dadurch gekennzeichnet, daß die Untereinheit dafür eingerichtet ist, einen eingeschränkten Funktionsmodus einzustellen, welcher die Möglichkeiten der Getriebegangschaltung begrenzt.

19. System gemäß einem der Ansprüche 1 bis 18, dadurch gekennzeichnet, daß es Vorrichtungen (450) aufweist, welche dafür eingerichtet sind, einen Modus der geringen Haftung der Räder des Fahrzeugs zu steuern und zu erfassen und im Zuge einer solchen Erfassung eine Steuerung einzustellen, welche geeignet ist, Mindeständerungen des auf die Räder übertragenen Motordrehmomentes sicherzustellen.

20. System gemäß einem der Ansprüche 1 bis 19, dadurch gekennzeichnet, daß es Vorrichtungen (450) aufweist, welche dafür eingerichtet sind, einen Modus der geringen Haftung der Räder des Fahrzeugs zu erfassen und im Zuge einer solchen Erfassung eine Steuerung einzustellen, welche geeignet ist, Mindeständerungen des auf die Räder übertragenen Motordrehmomentes sicherzustellen durch eine unterschiedliche Parametrierung der Gesetzmäßigkeiten:
- einer von der Rechnereinheit 500 angeforderten Absenkung des Motordrehmomentes vor der Gangumschaltung,
- des Auskuppelns vor der Gangumschaltung
- des Einkuppelns des Gangs nach der Gangumschaltung,
- der von der Rechnereinheit 500 angeforderten Wiederherstellung des Motordrehmomentes nach der Gangumschaltung, und
- des Einkuppelns während des Anfahrens des Fahrzeugs.

21. System gemäß einem der Ansprüche 1 bis 20, dadurch gekennzeichnet, daß es Vorrichtungen (450) aufweist, welche dafür eingerichtet sind, einen Modus der geringen Haftung der Räder des Fahrzeugs zu erfassen und automatisch das Umschalten in den zweiten Gang bei Stillstand des Fahrzeugs zu veranlassen, wenn die Bedingungen der geringen Haftung erfaßt werden.

22. System gemäß einem der Ansprüche 19 bis 21, dadurch gekennzeichnet, daß es Vorrichtungen (323) zur manuellen Betätigung aufweist, welche geeignet sind, Vorrichtungen (450) zu aktivieren, welche dafür eingerichtet sind, einen Modus der geringen Haftung der Räder des Fahrzeugs zu erfassen und im Zuge einer solchen Erfassung eine Steuerung einzustellen, welche geeignet ist, Mindeständerungen des auf die Räder übertragenen Motordrehmomentes sicherzustellen.

23. System gemäß Anspruch 22, dadurch gekennzeichnet, daß die Vorrichtungen (323) zur manuellen Betätigung von einem bistabilen Schalter mit zwei Positionen gebildet sind: einer ersten Position entsprechend einem Funktionsmodus der geringen Haftung und einer zweiten Position entsprechend einem normalen Funktionsmodus.

24. System gemäß einem der Ansprüche 19 bis 23, dadurch gekennzeichnet, daß es Vorrichtungen aufweist, um eine Situation der "blockierten Räder" zu erfassen und dann automatisch Vorrichtungen (450) zu aktivieren, welche dafür eingerichtet sind, eine Steuerung einzustellen, welche geeignet ist, Mindeständerungen des auf die Räder übertragenen Motordrehmomentes sicherzustellen.

25. System gemäß Anspruch 24, dadurch gekennzeichnet, daß die Vorrichtungen zur Erfassung einer Situation der "blockierten Räder" eine Abfrage eines an der ABS-Rechnereinheit entsprechenden Ausgangs durchführen.

26. System gemäß einem der Ansprüche 1 bis 25, dadurch gekennzeichnet, daß die Schaltung in geschlossener Schleife ohne Ausgang von einem Algorithmus der Art proportional integral gesteuert wird.

27. System gemäß einem der Ansprüche 1 bis 26, dadurch gekennzeichnet, daß der Schaltregekreis aufweist:
- ein Addierwerk (401), welches die Summierung eines Einstellwertes Δω · rif sicherstellt, welcher gleich der abgeleiteten Differenz zwischen einer Einstellmotordrehzahl und der Einstelldrehzahl der Antriebswelle des Getriebes ist
- ein Modul (402), welches das Ausgangssignal des zuvor genannten Addierwerks (401) bis zu einer Grenze X · rif max integriert,
- ein Addierwerk (403), welches die Summierung zwischen dem Ausgang des zuvor genannten Rechenmoduls und dem Differentialquotienten eines von einem mit dem Schaltstellantrieb (204) verbundenen Fühlers erzeugten Signals sicherstellt,
- ein Rechenmodul (404), welches den Steueralgorithmus der Art proportional integral auf das von dem zuvor genannten Addierwerk (403) ausgegebene Signal anwendet, und an seinem Ausgang einen Steuerstrom i für das Schaltelektroventil erzeugt,
- das Schaltelektroventil (EV),
- den Schaltstellantrieb (204),
- ein Rechenmodul (405), welches den Differentialquotienten des von dem mit dem Schaltstellantrieb (204) verbundenen Fühler erzeugten Signals berechnet, und
- ein Rechenmodul (406), welches die abgeleitete Differenz Istwert (Δω ·)zwischen der gemessenen Motordrehzahl (ωMOT) und der gemessenen Drehzahl der Antriebswelle (ω1) berechnet.

28. System gemäß Anspruch 27, in Kombination mit einem der Ansprüche 21 bis 25, dadurch gekennzeichnet, daß der Modus der geringen Haftung erreicht wird, indem den Eingangsparametern (Δω · rif) des ersten Addierwerks (401) und Ausgangsparametern (X · rif) des ersten Rechenmoduls (402) adäquate Werte derart gegeben werden, daß sich die Schaltung langsam schließt und Mindeständerungen des auf die Räder übertragenen Motordrehmomentes sichergestellt werden.

## Claims

1. A robotized manual gearbox system, including means (430) suitable for detecting when the vehicle is stationary by detecting when the engine speed (120) and the inlet speed and the outlet speed of the gearbox (100) are below minimum thresholds for a predefined time (T), and causing first gear to be engaged automatically when the system detects that the vehicle has stopped, with the engine (110) running, and with a gear ratio other than neutral or than reverse.

2. A system according to claim 1, characterized by the fact that it includes a signalling device (440) suitable for warning the driver of dangerous situations.

3. A system according to claim 1 or 2, characterized by the fact that it includes a signalling device (440) suitable for warning the driver of dangerous situations of the type in which the vehicle is stationary, with the engine running, with first gear engaged, and with a door of the vehicle open.

4. A system according to claim 2 or 3, characterized by the fact that the signalling device (440) is an audible device.

5. A system according to any one of claims 1 to 4, characterized by the fact that the predefined time (T) can be configured differently depending on whether or not an ABS is present.

6. A system according to any one of claims 1 to 5, characterized by the fact that it includes a control device (430) suitable for causing first gear to be engaged automatically when:
a control lever (320) is in the rest position; and
the system is not in the automatic operating mode; and
the gear ratio engaged is a gear that corresponds to a gear higher than first gear; and
the engine speed is higher than a threshold; and
the speed of the primary shaft of the gearbox (100) is lower than a threshold; and
the speed of the differential outlet shaft is lower than a threshold.

7. A system according to any one of claims 1 to 6, characterized by the fact that it includes control means (420) suitable for controlling an automatic operating mode for changing gear ratios in the gearbox (100).

8. A system according to claim 7, characterized by the fact that the control means (420) include a memory which stores the information required to change gear ratios.

9. A system according to claim 7 or 8, characterized by the fact that the control means (420) include a memory which stores the charts for changing gear as a function in particular of the position of the accelerator pedal (520) of the engine speed, and of the vehicle speed.

10. A system according to claim 9, characterized by the fact that the control means (420) store a plurality of gear change charts that can be selected by the driver.

11. A system according to claim 9 or 10, characterized by the fact that the control means (420) store three charts corresponding respectively to "economy" driving, to "comfort" driving, and to "sports" driving, the charts being selectable by the driver.

12. A system according to any one of claims 9 to 11, characterized by the fact that the control means (420) include a control (322) available to the driver for initiating an automatic operating mode, and where applicable for initiating a change over from automatic mode to manual mode.

13. A system according to claim 12, characterized by the fact that the control (322) available to the driver is formed by a monostable button.

14. A system according to claim 12 or 13, characterized by the fact that the control (322) is placed on a lever (320) for controlling gear changes.

15. A system according to any one of claims 12 to 14, characterized by the fact that the control (322) available to the driver defines a transient automatic state.

16. A system according to any one of claims 12 to 15, characterized by the fact that the control (322) available to the driver defines a transient automatic state in which a control module (400) maintains the automatic operating mode so long as the driver does not act on a gear shift control lever (320) or on the control (322) itself, thereby cancelling the automatic operating mode.

17. A system according to any one of claims 1 to 16, characterized by the fact that it includes a subassembly suitable for imposing an automatic operating mode when it no longer recognizes the requests made by the driver, as expressed by actuating a lever (320).

18. A system according to claim 17, characterized by the fact that the subassembly is suitable for imposing a degraded operating mode limiting the authorizations for gear changes.

19. A system according to any one of claims 1 to 18, characterized by the fact that it includes means (450) suitable for managing and detecting a low-grip mode in which the vehicle wheels are gripping poorly, and for responding to such a detection by imposing management suitable for minimizing variations in the engine torque transmitted to the wheels.

20. A system according to any one of claims 1 to 19, characterized by the fact that it includes means (450) suitable for detecting a low-grip mode in which the vehicle wheels are gripping poorly, and for responding to such a detection by imposing management suitable for minimizing variations in the engine torque transmitted to the wheels by different parameterization for the relationships governing the following:
reducing the engine torque as requested to an engine control computer (500) prior to gear changes;
declutching prior to gear changes;
clutching after gear changes;
re-establishing the engine torque as requested to the computer (500) after gear changes; and
clutching while the vehicle is starting.

21. A system according to any one of claims 1 or 20, characterized by the fact that it includes means (450) suitable for detecting a low-grip mode in which the vehicle wheels are gripping poorly, and for automatically constraining the vehicle to change into second gear when it stops if low-grip conditions are detected.

22. A system according to any one of claims 19 to 21, characterized by the fact that it includes manually actuated means (323) suitable for activating the means (450) suitable for detecting a low-grip mode in which the vehicle wheels are gripping poorly, and for responding to such a detection by imposing management suitable for minimizing variations in the engine torque transmitted to the wheels.

23. A system according to claim 22, characterized by the fact that the manually actuated means (323) are formed by a bistable button having two positions, namely a first position corresponding to a low-grip mode, and a second position corresponding to a normal operating mode.

24. A system according to any one of claims 19 to 23, characterized by the fact that it includes means for detecting a "wheels blocked" situation, and for responding to such a detection by automatically activating the means (450) suitable for imposing management suitable for minimizing variations in the engine torque transmitted to the wheels.

25. A system according to claim 24, characterized by the fact that the means for detecting a "wheels blocked" situation operate by examining a corresponding output on an ABS computer.

26. A system according to any one of claims 1 to 25, characterized by the fact that clutching is controlled in a closed loop by a proportional integral type algorithm.

27. A system according to any one of claims 1 to 26, characterized by the fact that the clutch control loop comprises:
an adder (401) which sums firstly a reference Δω·_{ref} equal to the differentiated difference between a reference engine speed and the reference speed of the primary shaft of the gearbox;
a calculator module (402) that integrates the signal output from the above-mentioned adder (401) to a limit X·_{ref max};
an adder 403 which sums the output of the above-mentioned calculator module and the derivative of a signal generated by a sensor associated with the clutch actuator (204);
a calculator module (404) which applies a proportional integral type control algorithm to the signal output by the above-mentioned adder (403), and which generates at its output a current i for controlling the electrically driven clutch valve;
the electrically driven valve (EV);
the clutch actuator (204);
a calculator module (405) which calculates the derivative of the signal generated by the sensor associated with the clutch actuator (204); and
a calculator module (406) which calculates the differentiated difference (Δω·) between the engine speed as measured (ωENG) and the primary shaft speed as measured (ω1).

28. A system according to claim 27, taken in association with any one of claims 21 to 25, characterized by the fact that the low-grip mode is obtained by giving suitable values to the input parameter (Δω·_{ref}) of the first adder (401) and to the output parameter (X·_{ref}) of the first calculator module (402) so that the clutch closes slowly and so as to minimize variations in the engine torque transmitted to the wheels.
